# EUROPEAN PATENT SPECIFICATION

(11) **EP 3 800 364 B1**
(45) Date of publication and mention of the grant of the patent: **20.09.2023**
(21) Application number: 20199348.2
(22) Date of filing: 30.09.2020
(51) Int. Cl.: F16C 32/06, F16H 7/02, F16H 55/36, G01M 1/16

(54) **BALANCING MACHINE**
AUSWUCHTMASCHINE
MACHINE À ÉQUILIBRER

(30) Priority: 03.10.2019 IT 201900017927
(43) Date of publication of application: 07.04.2021
(73) Proprietor: Balance Systems S.r.L., 20145 Milano (IT)
(72) Inventor: TRIONFETTI, Gianni, 20041 Agrate Brianza (Monza Brianza) (IT)
(74) Representative: Lunati & Mazzoni S.r.L.

(56) References cited:
- DE-A1- 4 441 954
- JP-A- 2010 145 208
- US-A1- 2002 124 650

## Description

The present invention relates to a balancing machine of a type specified in the preamble of the first claim.

Similar devices are described in patent applications: US 2002/124650 A1, DE 44 41 954 A1 and JP 2010 145208 A.

The invention thereby indicates a device capable of setting any rotor in rotation, for instance a wheel or a motor shaft, and subsequently to detect any possible unbalances in rotation and preferably to balance such imbalances.

As it is known, a balancing machine consists of a movement device capable of setting the rotor in rotation around a rotating axis; an imbalance detection device (dynamic or static); and in some cases a balancing device that balances the rotor in relation to the axis of rotation based on the detected imbalance.

The balancing device commonly works for removal of material (reducing the weight in a given area of the rotor so to stabilise its rotation) or for constraints of a weight to rotor in a given position or other.

The movement device can be connected to the rotor to be balanced and comprises a motor controlling the rotation of the rotor to be balanced and a kinematic mechanism of motion transmission from the motor to the rotor itself.

The kinematic mechanism may be belt-driven and may include a belt, a drive pulley associated with the motor and moving the belt; a driving portion conducted by the belt and part of the rotor; and transmission pulley ensuring the correct contact of the belt on at least the driving portion of rotor. The transmission pulleys may therefore vary the direction of the advancement of the belt and/or maintain correctly tensioned.

The detection device is able to detect intensity and position of possible radial forces on the rotor for example by means of piezoelectric or other similar elements capable of detecting such forces.

The cited prior art includes some important drawbacks. In particular, due to the high speed rotation of the rotor, the balancing device is subjected to a considerable mechanical stress that can cause arise of vibrations or other noise that downgrades the detection of the imbalance and the balancing of the rotor. Another inconvenience is that the high speed rotation can lead to heating of one or more components, especially of the motion transmission kinematics, with a consequent rapid deterioration of them.

Such aspects result in the need to use particular technical solutions (for example special bearings and/or lubricated in mist oil) that increase the costs, both of purchase and maintenance, of the balancing machine without however representing an optimal solution to the above mentioned drawbacks.

In this context, the technical task underlying the present invention is to realize a balancing machine that is capable of substantially overcoming at least some of the above-mentioned drawbacks. Within the scope of the mentioned technical task, it is an important purpose of the invention to obtain a high precision balancing machine and in particular able to perform a perfect balancing.

Another important purpose of the invention is to create a balancing machine with a low cost of maintenance and purchase and high constructive simplicity.

The technical task and the specified purposes are achieved by a balancing machine as claimed in the annexed claim 1. Examples of preferred embodiments are described in the dependent claims.

The features and the advantages of the invention are are clearly evident from the following detailed description of preferred embodiments thereof, with reference to the accompanying drawings, in which;
Fig. 1 shows a balancing machine according to the invention;
Fig. 2 illustrates the section of a particularity of the balancing machine according to the invention; and
Fig. 3 shows a different section of the particularity shown in Fig. 2

The measurements and data reported in this text are to be considered, unless otherwise indicated, as performed in the International Standard Atmosphere ICAO (ISO 2533).

With reference to the drawings, the balancing machine according to the invention is globally indicated with the number 1.

It briefly comprises a driving device 2 capable of rotating a rotor 1a preferably to be measured and/or balanced; a detection device for detecting the imbalance of the rotor 1a placed in rotation by the driving device 2; and preferably a balancing device which balances the rotor 1a on the basis of the imbalance detected by the detection device.

The balancing machine 1 in addition comprises a control unit of functioning of devices, i.e. of the balancing machine 1; and a power supply system of the balancer 1 preferably electric such as a battery and/or a connector to an external electrical network.

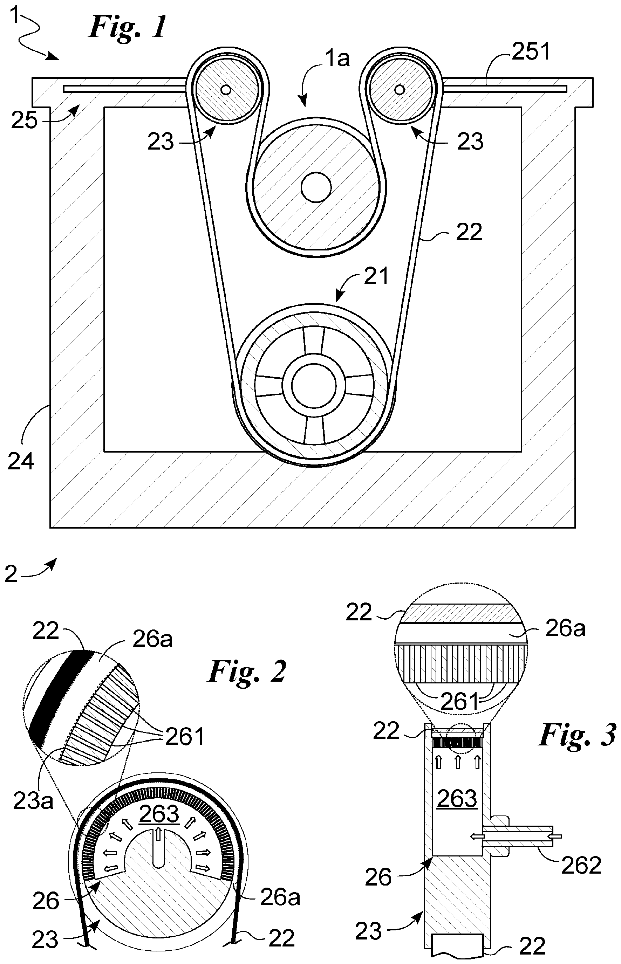

The detection device and, if present, the balancing device are per se known to a technician expert in the field of the present invention. Thus, they are not described in this document. They are for example described in patent applications EP-A-2717032 from paragraph 22 to 70 and in Figures 1 and 2.

The driving device 2 includes a drive pulley 21; at least one belt 22 adapted to take the motion from the drive pulley 21 and pull in rotation a driving portion of the rotor 1a; at least two transmissions 23 defining a sliding surface 23a for the belt 22 interposed between the rotor 1a and the drive pulley 21.

The sliding surface 23a can have an angular extension nearly at least equal to 90° and in detail to 120° and more in detail substantially equal to 180°.

The driving device 2 can also include a support structure 24 for at least the pulley 21, the belt 22 and the at least two transmissions 23.

The drive pulley 21 may include a motor preferably electric. It is hinged to the support structure 24.

The pulley 21 can provide a scrolling groove for each belt 22.

It is shown as the rotor 1a defines for each belt 22 a contact surface along which the belt 22 slides by dragging in rotation the rotor 1a. Said contact surface may be a groove.

According to the claimed invention, the driving device 2 includes at least two transmissions 23 available on opposite sides in respect to the rotor 1a.

At least two transmissions 23 ensure the correct contact of the belt 22 on the rotor 1a and especially the drive pulley 21.

At least two transmissions 23 vary the direction of advancement of the belt 22.

Alternatively or in addition, at least one transmission 23 ensures the correct tensioning of the belt 22.

It is specified that the driving device 2 can include a regulator 25 of the position of the transmission 23 and thus of the sliding surface 23a in respect to the belt 22.

The regulator 25 is capable of moving the transmissions 23 in respect to the support structure 24. It varies, in such a way, the direction of advancement of the belt 22 and/or adjust the pressure of the transmissions 23 so that they press against the belt 22 keeping it correctly tensioned.

The regulator 25 may include a cursor linked to the transmissions 23; and a guide 251 defining an axis of movement for the cursor conveniently almost transversal to the belt 22.

The transmissions 23 can be identified in a pulley defining the sliding surface 23a. Preferably, thepulley includes a groove that define the sliding surface 23a. It can be idly hinged to the support structure 24 or, in a preferred alternative, integral with it and therefore fixed.

Alternatively or in addition, the transmissions 23 can be identified in a component integral with the support structure 24 shaped so to define the sliding surface 23a. In this case the transmissions can be made in one piece with the structure 24 or separated from it and for instance made in a different material.

According to the claimed invention, the driving device 2 includes an adduction apparatus 26 for the supply of compressed air (Figs. 2 and 3).

The adduction apparatus 26 is able to pump, conveniently without solution of continuity, pressurized air between the sliding surface 23a and the belt 22, creating an air bearing 26a between the sliding surface 23a and the belt 22.

The pressurised air placed at the sliding surface 23a preferably presents a pressure of at least to 2 Atm and more preferably included between 2 and 8 Atm.

The air bearing 26a substantially cancels the contact force between the transmission 23 and the belt 22 substantially eliminating the friction between the belts 22 and the transmissions 23.

Preferably the air bearing 26a substantially avoids a contact between the sliding surface 23a and the belt 22. The sliding surface 23a can therefore remain fixed. The adduction apparatus 26 may include, for each sliding surface 23a, at least one adduction channel **261** able to introduce pressurized air between the sliding surface 23a and the belt 22.

Preferably the one or more adduction channels 261 are identifiable in micro-holes made on the transmission 23 at each sliding surface 23a substantially transverse and, in detail, nearly perpendicular to the sliding surface 23a (Figs 2 and 3).

Conveniently, the micro-holes are created along at least the entire sliding surface 23a.

Alternatively or in addition, the one or more adduction channels 261 may be identified in the porosity (preferably a micro-porosity) of the manufacturing material of at least part of the transmissions 23 at least at the sliding surface 23a. The material can me microporous ceramic.

Conveniently only the sliding surface 23a and in particular the groove (preferably only the bottom of the groove) can be made with said microporous material.

The adduction apparatus 26 may include at least one connector 262 capable of placing in connecting of fluid passage the one or more adduction channels 261 with a compressed air supply system.

Preferably, the adduction apparatus 26 includes a connector 262 for each transmission 23.

Optionally, the power supply system can be integrated and therefore part of the adduction apparatus.

In order to ensure a uniformed delivery of the pressurized air from all the adduction channels 261, the adduction apparatus 26 can include, for each transmission 23, an air chamber 263 suitable for interposing between the connector 262 and the adduction channels 261 of a sliding surface 23a.

Optionally, the driving device 2 can include a pulley which is kinematically driven between the rotor 1a and belt 22.

The rotor 1a is set in rotation by the belt 22 that reacts on the driving portion of the rotor 1a itself.

The rotor 1a is constrained to the support structure 24.

The following description describes the operation of the balancing machine 1, previously described in structural terms. This operation defines a new balancing process.

The balancing process includes, briefly, a movement phase in which the rotor 1a is set in rotation; a detecting phase wherein it is detected the unbalance of the rotating rotor 1a; and thus an optional balancing phase that balances the rotor 1a based on the imbalance detected in the detection phase.

The movement and detection phase can be simultaneous.

The movement phase includes a blowing sub-phase wherein between belt 22 and each sliding surface 23a is introduced compressed air creating an air bearing 26a between the sliding surface 23a and the belt 22; therefore a subphase of the rotor 1a. The blowing and putting into rotation sub-phases can be performed simultaneously.

In the blowing sub-phase the adduction apparatus 26 introduces, appropriately through at least one adduction channel 261, pressurized air between the sliding surface 23a and the belt 22. This pressurized air thus creates an air bearing 26a that distances the belt 22 from the sliding surface 23a substantially avoiding their mutual contact, or considerably lightening it.

In the sub-phase of putting into rotation, the driving pulley 21 moves the belt 22 which, guided by the transmissions 23, sets the rotor 1a into rotation.

In detail, the belt 22 slides on the air bearings 26a.

At this point, the process provides the detection phase and the eventual balancing phase.

The detection phases and, if present, balancing ones are both known to a skilled person of the art and therefore not dealt here. They are for instance described in patent application EP-A-2717032 from paragraph 22 to paragraph 70 and in Figures 1 and 2.

The balancing machine 1 and thus the balancing process according to the invention achieve important advantages.

In fact, the presence of the air bearings 26a between the transmissions 23 and the belt 22 allows to reduce the friction and therefore the loads to which the balancer 1 is subjected.

This aspect is fundamentally important in the case of high rotation where, unlike the known balancing machines, such speeds do not cause the occurring of vibrations, loads or overheating of the balancing machine 1 that can lead to its rapid deterioration (resulting in a need of minor maintenance and less frequent breakages) or incorrect valuations of imbalance.

Another important advantage given by the introduction of air bearings 26a, causing a decrease in friction and therefore of loads, is that the balancing machine 1 allows to adaptation of reduced power motors, reducing the costs and consumption of the balancing machine.

The invention is susceptible of variants within the scope of the inventive concept defined by the claims. For instance, the adduction channel 261 can be identified in a duct capable of introducing air parallel to the sliding surface 23a with the direction of advancement preferably coinciding to the sliding direction of the belt 22.

## Claims

1. Balancing machine (1) including:
- a driving device (2) capable of rotating a rotor (1a);
- an unbalance detecting device of said rotor (1a) placed in rotation by said driving device (2);
- said driving device (2) including
- at least one belt (22) able to drive said rotor (1a) in rotation;
- and at least two transmissions (23) defining sliding surfaces (23a) for said belt (22);
- a drive pulley (21), able to move said belt (22), wherein said transmissions (23) are interposed between said rotor (1a) and said drive pulley (21) on opposite sides with respect to the rotor (1a)
- and **characterised by** the fact that said movement device (2) includes an adduction apparatus (26) able to introduce pressurized air between said sliding surface (23a) and said belt (22) creating an air bearing (26a) between said transmissions (23) and said belt (21).

2. Balancing machine (1) according to claim 1, wherein said pressurized air has a pressure at least equal to 202650 kPa (2 ATM).

3. Balancing machine (1) according to at least one previous claim, wherein said at least two transmissions (23) each include a pulley defining said sliding surface (23a).

4. Balancing machine (1) according to the previous claim, wherein said driving device (2) includes a support structure (24) for at least said pulley (21), said at least two transmissions (23); and wherein said at least two transmissions (23) each include a pulley integral with said support structure (24).

5. Balancing machine (1) according to at least one previous claim, wherein said adduction apparatus (26) includes, for each of said sliding surface (23a), several adduction channels (261) capable of introducing pressurized air between said sliding surface (23a) and said belt (22).

6. Balancing machine (1) according to the previous claim, wherein said adduction channels (261) are identifiable in micro-holes substantially transverse to said sliding surface (23a).

7. Balancing machine (1) according to claim 5, wherein said transmissions (23) are made, at least at said sliding surface (23a), of porous material; and wherein said adduction channels (261) are identifiable in the porosity of said porous material.

8. Balancing machine (1) according to at least one of claims 5-7, wherein said adduction apparatus (26) includes a connector (262) able to put said adduction channels(261) in fluid passage connection with a compressed air supply system and, for each said at least two transmissions (23), an air chamber (263) able to interpose between said connector (262) and said adduction channels (261) of said at least two transmissions (23)_{.}

## Patentansprüche

1. Auswuchtmaschine (1) mit:
- eine Antriebsvorrichtung (2), die in der Lage ist, einen Rotor (1a) zu drehen;
- eine Vorrichtung zur Erfassung der Unwucht des Rotors (1a), der durch die Antriebsvorrichtung (2) in Drehung versetzt wird;
- wobei die Antriebsvorrichtung (2) Folgendes umfasst
- mindestens einen Riemen (22), der den Rotor (1a) in Drehung versetzen kann;
- und mindestens zwei Übertragungen (23), die Gleitflächen (23a) für den Riemen (22) definieren;
- eine Antriebsscheibe (21), die in der Lage ist, den Riemen (22) zu bewegen, wobei die Übertragungen (23) zwischen dem Rotor (1a) und der Antriebsscheibe (21) auf gegenüberliegenden Seiten in Bezug auf den Rotor (1a) angeordnet sind
- und **dadurch gekennzeichnet, dass** die Bewegungsvorrichtung (2) eine Adduktionsvorrichtung (26) umfasst, die in der Lage ist, Druckluft zwischen die Gleitfläche (23a) und den Riemen (22) einzuführen, wodurch ein Luftlager (26a) zwischen den Übertragungen (23) und dem Riemen (21) entsteht.

2. Auswuchtmaschine (1) nach Anspruch 1, **dadurch gekennzeichnet, dass** die Druckluft einen Druck von mindestens 202650 kPa (2 Atm) aufweist.

3. Auswuchtmaschine (1) nach mindestens einem der vorhergehenden Ansprüche, wobei die mindestens zwei Übertragungen (23) jeweils eine Riemenscheibe umfassen, die die Gleitfläche (23a) definiert.

4. Auswuchtmaschine (1) nach dem vorhergehenden Anspruch, wobei die Antriebsvorrichtung (2) eine Tragstruktur (24) für mindestens die Riemenscheibe (21) und die mindestens zwei Getriebe (23) aufweist; und wobei die mindestens zwei Getriebe (23) jeweils eine mit der Tragstruktur (24) integrierte Riemenscheibe aufweisen.

5. Auswuchtmaschine (1) nach mindestens einem der vorhergehenden Ansprüche, wobei die Adduktionsvorrichtung (26) für jede der Gleitflächen (23a) mehrere Adduktionskanäle (261) aufweist, die in der Lage sind, Druckluft zwischen die Gleitflächen (23a) und den Riemen (22) einzuführen.

6. Auswuchtmaschine (1) nach dem vorhergehenden Anspruch, wobei die Adduktionskanäle (261) in Mikrolöchern erkennbar sind, die im Wesentlichen quer zur Gleitfläche (23a) verlaufen.

7. Auswuchtmaschine (1) nach Anspruch 5, wobei die Führungen (23) zumindest an der Gleitfläche (23a) aus porösem Material hergestellt sind und wobei die Adduktionskanäle (261) in der Porosität des porösen Materials erkennbar sind.

8. Auswuchtmaschine (1) nach mindestens einem der Ansprüche 5-7, wobei die Adduktionsvorrichtung (26) ein Verbindungsstück (262), das die Adduktionskanäle (261) in Fluiddurchgangsverbindung mit einem Druckluftzufuhrsystem bringen kann, und für jedes der mindestens zwei Getriebe (23) eine Luftkammer (263) umfasst, die zwischen dem Verbindungsstück (262) und den Adduktionskanälen (261) der mindestens zwei Getriebe (23) angeordnet werden kann.

## Revendications

1. Machine d'équilibrage (1) comprenant :
- un dispositif d'entraînement (2) capable de faire tourner un rotor (1a) ;
- un dispositif de détection du balourd dudit rotor (1a) mis en rotation par ledit dispositif d'entraînement (2) ;
- ledit dispositif d'entraînement (2) comprenant
- au moins une courroie (22) capable d'entraîner en rotation ledit rotor (1a) ;
- et au moins deux transmissions (23) définissant des surfaces de glissement (23a) pour ladite courroie (22) ;
- une poulie d'entraînement (21), capable de déplacer ladite courroie (22), dans laquelle lesdites transmissions (23) sont interposées entre ledit rotor (1a) et ladite poulie d'entraînement (21) sur des côtés opposés par rapport au rotor (1a)
- et **caractérisé par le fait que** ledit dispositif de mouvement (2) comprend un appareil d'adduction (26) capable d'introduire de l'air sous pression entre ladite surface de glissement (23a) et ladite courroie (22) en créant un palier à air (26a) entre lesdites transmissions (23) et ladite courroie (21).

2. Machine d'équilibrage (1) selon la revendication 1, dans laquelle ledit air sous pression a une pression au moins égale à 202650 kPa (2 Atm).

3. Machine d'équilibrage (1) selon au moins une revendication précédente, dans laquelle lesdites au moins deux transmissions (23) comprennent chacune une poulie définissant ladite surface de glissement (23a).

4. Machine d'équilibrage (1) selon la revendication précédente, dans laquelle ledit dispositif d'entraînement (2) comprend une structure de support (24) pour au moins ladite poulie (21), lesdites au moins deux transmissions (23) ; et dans laquelle lesdites au moins deux transmissions (23) comprennent chacune une poulie solidaire de ladite structure de support (24).

5. Machine d'équilibrage (1) selon au moins une revendication précédente, dans laquelle ledit dispositif d'adduction (26) comprend, pour chacune de ladite surface de glissement (23a), plusieurs canaux d'adduction (261) capables d'introduire de l'air sous pression entre ladite surface de glissement (23a) et ladite courroie (22).

6. Machine d'équilibrage (1) selon la revendication précédente, dans laquelle lesdits canaux d'adduction (261) sont identifiables dans des micro-trous sensiblement transversaux à ladite surface de glissement (23a).

7. Machine d'équilibrage (1) selon la revendication 5, dans laquelle lesdites transmissions (23) sont réalisées, au moins au niveau de ladite surface de glissement (23a), en matériau poreux ; et dans laquelle lesdits canaux d'adduction (261) sont identifiables dans la porosité dudit matériau poreux.

8. Machine d'équilibrage (1) selon l'une au moins des revendications 5 à 7, dans laquelle ledit dispositif d'adduction (26) comprend un connecteur (262) apte à mettre lesdits canaux d'adduction (261) en relation de passage de fluide avec un système d'alimentation en air comprimé et, pour chacune desdites au moins deux transmissions (23), une chambre à air (263) apte à s'intercaler entre ledit connecteur (262) et lesdits canaux d'adduction (261) desdites au moins deux transmissions (23).
